# EUROPEAN PATENT SPECIFICATION

(11) **EP 2 577 007 B1**
(45) Date of publication and mention of the grant of the patent: **07.08.2019**
(21) Application number: 11730177.0
(22) Date of filing: 03.06.2011
(51) Int. Cl.: F01M 1/16, G01L 7/16, H01H 35/38

(54) **HYDRAULIC SYSTEM FOR CENTRAL LUBRICATION OF ENGINE CYLINDERS**
HYDRAULISCHES SYSTEM ZUR SCHMIERUNG VON MOTORZYLINDERN
DISPOSITF HIDRAULIQUE POU LE GRAISSAGE DES CYLINDRES D'UN MOTEUR

(30) Priority: 04.06.2010 DK 201070249
(43) Date of publication of application: 10.04.2013
(73) Proprietor: Hans Jensen Lubricators A/S, 9560 Hadsund (DK)
(72) Inventor: BAK, Peer, DK-9300 Sæby (DK)
(74) Representative: Nielsen, Leif
(86) International application number: PCT/DK2011/050196
(87) International publication number: WO 2011/150943

(56) References cited:
- WO-A1-92/20909
- WO-A1-2008/122756
- US-A- 3 910 120
- US-A- 3 937 912
- US-A- 4 278 856

## Description

### Field of the Invention

The present invention concerns a central cylinder lubrication system for cylinder lubrication of engine cylinders in large diesel engines, in particular marine engines, said central cylinder lubrication system effects the cylinder lubrication by oil injection by feeding portions of oil under pressure through respective connecting pipes to various points to be lubricated at relevant time intervals, and said central cylinder lubrication system is designed with injectors and a lubricating apparatus, the system including at least one pump unit which via the connecting pipes is connected with an associated system unit selected among an injector and an accumulator, wherein injectors are provided in the form of oil injection nozzles which is provided in a cylinder wall for supplying cylinder lubricating oil inside the cylinder.

By the term system unit as used in the present application is meant a hydraulic unit connected with a pump. It may be an injector used for injecting oil from the pump or it may be an accumulator connected with the pump with the object of equalising pressure fluctuations for subsequent delivery of the oil at an approximately constant pressure. In a central lubrication system according to the invention, where both an injector and an accumulator are used, a leak detector may be used for injector as well as for accumulator.

### Background of the Invention

In traditional central cylinder lubricating apparatuses, mainly for large two-stroke diesel engines, two or more central lubricating apparatuses are used, each providing lubrication at points in a single or a plurality of cylinders, i.e. by feeding portions of oil under pressure through respective connecting lines to the various points to be lubricated at relevant time intervals. See for example EP 0 678 152.

Lubricating apparatuses are traditionally designed with a number of pump units which are mounted in close association with respective cylinders and connected with a feeding reservoir for lubricating oil and with injectors in the form of oil injection nozzles at different points on the cylinder walls.

Each pump unit includes a reciprocating pump that feeds an injector with oil and which is driven by a common rotating control shaft with cams provided thereon. By the rotation of the shaft, the cams with pressing heads act on respective axially displacing pistons which are spring biased in direction towards the control shaft, so that the pistons at the rotation of the shaft will perform reciprocating movements for activating the pistons of the reciprocating pumps.

For many years, lubricating apparatuses have operated under the condition that the discharge pressure from the reciprocating pumps did not have to be very large. Typically with injection of lubricating oil at a pressure of 10 - 15 bar. It was a fixed standard that the oil was to be injected into the cylinder during the upward return stroke of the engine piston, i.e. under the compression process, however before the subsequent power stroke by the ignited combustion. This system has typically included injectors with nonreturn valve based valve injection.

In recent years it has been proposed to increase the efficiency of the lubrication by injecting the oil through injectors in the form of pressurised atomising nozzles for achieving oil mist lubrication during the upwards movement of the piston. However, hereby the oil is applied a far higher pressure for ensuring fine atomisation through atomising nozzles, e.g. a pressure up to 25 bar or higher. In some systems at pressures up to 100 bar.

Furthermore, in recent years there has been a tendency that electronically based diesel engines are produced to a wider extent, and on these engines the mechanical drives traditionally used for driving mechanical lubricating apparatuses have been removed.

Injectors will thus, as mentioned in the present application, include oil injecting nozzles and/or pressurised atomising nozzles.

In both systems, the control shaft is driven through a direct or indirect mechanical coupling with the crankshaft of the engine, whereby it is possible to provide power for the activation of pumps and at the same time to achieve synchronisation between the crankshaft of the engine and the control shaft of the lubricating apparatus.
A lubricating apparatus may e.g. include a box-shaped apparatus housing, from where connecting pipes extend to the lubricating points on the associated engine cylinder, e.g. in a number of 6-24.

The pistons are traditionally operated by means of activation cams/rocker arms on a through-going control shaft which is rotated synchronously with the crankshaft of the engine. The pistons are spring biased towards the activation cams. There is provided a set screw defining the extreme position of an associated activation cam. The set screws may be operated for determining individual operative strokes of the pistons and thereby the associated yield of the individual piston pumps. An example of a lubricating apparatus is disclosed in EP 1 390 60 where a more detailed description of the operation of the lubricating apparatus is provided.

Today are thus applied injectors operating at a relatively higher pressure than the nonreturn valves traditionally used for feeding the lubricating oil into large two-stroke diesel engines at lower pressures. Examples of injectors with elevated operating pressure is an injector according to WO 0028194 or an injector according to EP 1 350 929.

It applies both for systems with low pressure and for systems with high pressure that the pressure in the lubricating oil supply varies rather much, but in particular for injectors with increased operating pressures it is relatively easy to define an acceptable minimum pressure that clearly defines if there is an unacceptable leak in the injector.

During normal operation, problems may arise by all injectors, with the injector becoming leak, e.g. in case that dirt comes into the injector. Today there are no methods at hand for detecting leaks. When the injectors are active, the engine is running, and it is not possible visually to "look" into it and discover a leaking injector. In a laboratory, one of the ways of ascertaining if there is a leaking injector is to monitor the pressure in the lubricating oil supply to the injector. This solution cannot immediately be transferred to a complete engine since it would mean that a pressure sensor is to be fitted at each lubricating oil supply. This will both be expensive and at the same time require construction of a control unit that monitors all the sensors and triggering an alarm when the pressure in one or more injectors drops below a given level.

It will be advantageous if continuously and with running engine it may be ascertained that one or more injectors are leaking.

There is thus a need for a system which enables continuous monitoring of leakage with running engine in order to ascertain if one or more injectors are leaking.

Some central cylinder lubricating systems include an accumulator. The accumulator is connected with the pump with the object of equalising pressure fluctuations for subsequent feeding of the lubricating oil at an approximately constant pressure. In these systems it is also important that the pressure is kept above a predefined, acceptable minimum pressure which ensures that the lubricating oil is supplied correctly into the cylinder.

For all systems where accumulators are used, a leak may arise during normal operation. The leak may arise in the accumulator. In prior art systems, accumulators may loose feeding pressure with time. Therefore, for accumulators fixed time intervals are set for service/check. It is not possible to check if the feeding pressure is in order without having to mount some extra equipment which together with mounting of it actually may risk changing the feeding pressure. In principle, this will correspond to measuring the pressure in a balloon in that for measuring the pressure it is required to place a sensor inside the balloon, and such a sensor can be difficult to place without risk of changing the pressure. In general, it is difficult to see if an accumulator is functioning in the form of equalising pressure differentials from the pump.

When the pressure in the accumulator becomes very low due to leakage on the gas side, the pressure in the connecting pipe cannot equalise pressure differences, and surges occur in the connecting line.

Between the mentioned services/checks, leakages may arise which for a shorter or longer time - until the next check - can lead to unacceptable low pressure in the lubricating oil. Therefore, there is a need for ensuring continuous leak monitoring in such systems.

From WO 0198638 is known a system for cylinder lubrication which includes a pump which via a connecting pipe is connected with an accumulator and via further connecting pipe with an injector. A pressure sensor is provided in connection with the accumulator. The pressure sensor is adapted to emit a signal at low pressure for adjusting the pressure of the pump. An analogous signal is used in order to perform adjustment. The pressure may vary and be at any level between system pressure and maximum pressure for the pump. There is no registration of leakages in system units. From WO 2008/122756 is known a hydraulic system which is used for lubricating turbochargers bearings via an oil supply line. Sensors are disclosed which e.g. monitor the oil pressure of the turbocharger. The system is used for constant oil supply to the bearings and to shut down oil supply when operating conditions meet or exceed predetermined limits. This system is based on constant pressure-principle, where additional oil is continuously added corresponding to the oil let through the bearings due to leakage in the bearings - hereby lubricating and cooling the bearing at the same time. There is no registration of leakages in system units. WO 92/20909 discloses a further central lubrication system for cylinder lubrication in large diesel engines.

### Object of the Invention

It is the object of the present invention to relieve the above drawbacks and to indicate a very reliable, technically simple and cheap system for monitoring leakage and pressure drop, which enables continuous monitoring of leakage with running system/engine so as to ascertain if one or more system units in the form of injectors and/or accumulators are leaking or are in a condition of operation with a drop in the injection pressure.

### Description of the Invention

According to the present invention, this is achieved by a central lubrication system of the type mentioned in the introduction which is peculiar in that a leak detector is provided in the central cylinder lubrication system, in the connecting pipe between the pump unit and the associated system unit, and that the leak detector is adapted for emitting a signal when the oil pressure in the connecting pipe go under a predetermined level, and that the leak detector includes a housing with a chamber connected with the connecting pipe, that a spring-loaded pin is mounted in a boring passing through the wall of the housing, that a sealing element is disposed between the pin and the boring, that the pin is pressed outwards by the oil pressure in the chamber to an outer position when the oil pressure overcomes the force from the spring.

In a central lubrication system according to the invention, where both an injector and an accumulator are used, a leak detector may be used for the injector as well as for the accumulator.

By a leak in an injector, the pressure in the connecting pipe will drop, and the lead detector then emits a signal when the pressure goes under the predetermined level.

The use of a leak detector may also be applied to a system where a central pump and one or more accumulators are used. The principle could be used for detecting leakage in an accumulator, that is an inadvertent drop in the feed pressure of the accumulator.

For accumulators there are sensors which can be mounted for monitoring at the gas side of the accumulator, i.e. for monitoring feed pressure, but according to the invention at the pressure side, i.e. the liquid side in front of the accumulator, a leak detector can be mounted for monitoring the pressure in the pressure line/connection pipe. In case that an accumulator is about to loose feed pressure due to errors or lack of service, the surges in the pressure line will have a markedly greater variation, and this can be detected by the leak detector.

By leak in an accumulator it is possible to get an indication of possible leakage by registering the pressure at the liquid side of the accumulator. Hereby it is possible to check if the prefeeding pressure at the gas side of the accumulator is in order. According to the invention, the leak detector will be disposed at the liquid side, monitoring whether the pressure in the feeding line varies more than what is allowable.

The basic idea with the spring loaded pin is that here we have a purely mechanical and spring-based solution. By proper selection of spring, the position of the spring-loaded pin will indicate if the pressure in the chamber in front of the pin goes under the predetermined pressure which is typically selected as a minimum pressure for the oil pressure. This means that the spring will not remain in its outer position if the pressure drops. Hereby is provided a direct visual signal that the pressure has dropped.

In a very simple form, the leak detector can be a mechanical unit where the signal is a visual signal. But in an alternative version, the leak detector can be electronic and emit an acoustic signal or a light signal. The predetermined pressure is determined by a level lying under the normal operating pressure. Emission of a signal where the pressure drops below the predetermined pressure will express that a leak occurs in the system. Hereby is established a very simple and reliable monitoring, and the leakage detector can be observed while the system operates, for example while an engine is running.

According to a further embodiment, the system according to the invention is peculiar in that the pin at its end inside the chamber is provided with a lock ring serving as support for one end of the spring, and that the other end of the spring is bearing against a collar in the boring. Since the leak detector is formed by a pin and a spring, operation will occur at a fixed pressure. If desired to adjust the predetermined pressure, the lock washer can be replaced by a screw and the pin provided with a threaded hole. Hereby may be provided adjustment of the length of the spring and thereby the prestressing which is established in the spring.

According to a further embodiment, the system according to the invention is peculiar in that between the spring and the lock ring a plate is provided, and that between the spring and the collar a plate and the sealing element are provided. Hereby, secure abutment faces are achieved for the spring, and at the same time it is possible to use a sealing element which is disposed between the plate and the collar. This enables use of an O-ring which is a simple and cheap sealing. The plate ensures that no contact with the spring occurs such that the risk of damage to the O-ring is avoided.

According to a further embodiment, the system according to the invention is peculiar in that the pin has a head which in the outer position has an outer side projecting from an outer side of the housing, and that the head has an underside bearing against a collar in the boring at an inner position, where the pressure in the oil goes under the predetermined level such that the outer side of the head is flush with the outer side of the housing. As the pin has two outer positions of which one will bring the head outside the outer side of the housing, there is an unequivocal and simple indication of the pressure being above the predetermined level. In case of leakage, the head will be embedded in the housing and be flush with the outer side of the housing, providing an unambiguous and simple visual signal showing the occurrence of a leak/pressure drop.

According to a further embodiment, the system according to the invention is peculiar in that the pin is connected with an electronic sensor, e.g. an inductive sensor, which is adapted to emit a signal when the pin leaves its outer position. The displacement of the pin from its outer position may hereby be detected electronically, and the signal for a leakage condition may be provided at an arbitrary place in engine or control room according to wish. The system is adapted such that by a pressure above a given level, the pin is always completely out. A preset pressure of 30 bar will, for example, cause that the pin stands out all the time at pressures above 30 bar, and that the pin is standing moving in and out when the pressure is lower, e.g. 25 bar, as the movement follows the pressure peaks from the injector.

According to a further embodiment, the system according to the invention is peculiar in that the leak detector includes a pressure switch provided in the connecting pipe and which is adapted to emit a signal when the pressure goes under the predetermined level. Instead of a mechanical solution with the spring-loaded pin, an electronic system may be applied where a pressure switch substitutes the mechanically movable parts. Pressure drops may hereby be detected electronically, and the signal for a leakage condition may be provided at an arbitrary place in engine or control room according to wish.

According to a further embodiment, the system according to the invention is peculiar in that the leak detector is built integrally with the lubricating apparatus. Hereby is provided a simple design by which an operator can see by the lubricating apparatus if leakage occurs at one or more system units.

According to a further embodiment, the system according to the invention is peculiar in that the leak detector is built integrally with the system unit, preferably the injector. Hereby is also achieved a simple design where the operator is provided a signal about possible leakages/pressure drops directly at each system unit/injector.

According to a further embodiment, the system according to the invention is peculiar in that the housing of the leak detector is formed by a T-piece with a transverse part having a through-going duct and with a stem containing the chamber which is formed by a threaded boring in the stem, and that the boring is closed by a threaded plug with an inner boring in which spring-loaded pin is mounted. This design is easy to make and suited for insertion at an arbitrary position in a connecting pipe or in direct connection to mounting of a connecting pipe to an injector/accumulator or the lubricating apparatus. The connecting pipes, the system unit in the form of injector/accumulator and/or the lubricating apparatus are connected with the transverse part. If adaptation is to be made to different pressures, the plug and the spring-loaded pin therein can readily be replaced. This will enable simplified stock control with few elements.

According to a further embodiment, the system according to the invention is peculiar in that the central lubrication system preferably constitutes a central lubricating apparatus and includes a central pump station connected with system units in the form of injectors in order to supply the injectors with lubricating oil, and system units in the form of a central accumulator or decentralised accumulators through which the oil is supplied to the injectors.

According to a further embodiment, the system according to the invention is peculiar in that the system includes a pump station connected with a system unit in the form of an accumulator, and that the accumulator is connected with a pressure supply line, where execution of the oil dosing is effected under relatively uniform pressure conditions. In such a system, there will be established a monitoring of the pressure supplied by the accumulator by mounting the leak detector in the pressure supply line leading from the accumulator to a point of use.

### Description of the Drawing

The invention is explained in detail in the following with reference to the drawing, where:
- Fig. 1: shows a partial view of a first embodiment of a central lubrication system according to the invention;
- Fig. 2: shows a partial view of a second embodiment of central lubrication system according to the invention;
- Fig. 3: shows a partial view of a third embodiment of central lubrication system according to the invention;
- Fig. 4: shows an enlarged detail of the leak indicator shown in Fig. 3;
- Fig. 5: shows a detailed sectional view of a leak detector;
- Fig. 6: shows a schematic drawing of a further embodiment of a central lubrication system and with a central lubricating oil supply in the form of a central pump station where a central accumulator is used;
- Fig. 7: shows a partial view of an alternative embodiment of the leak detector;
- Fig. 8: shows a partial view of an alternative embodiment of the leak detector; and
- Fig. 9: shows a partial view of a first embodiment of a central lubrication system according to the invention in the form of a pump unit with associated accumulator.

### Detailed Description of Embodiments of the Invention

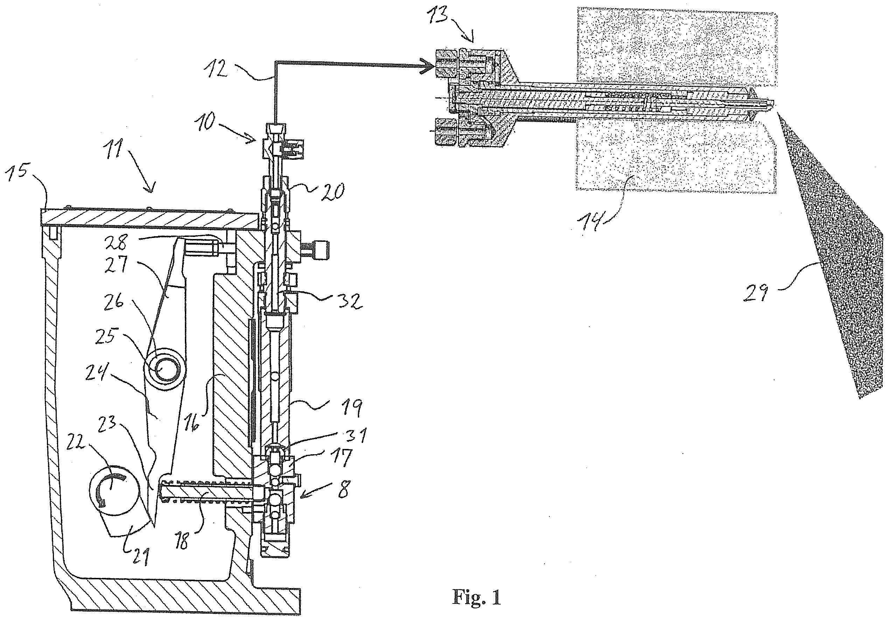

In Figs. 1, 2 and 3 is shown a lubricating apparatus 11. The shown lubricating apparatus has a box-shaped apparatus housing 15 which at a front wall 16 carries a series of reciprocating pump units 8, of which only one is shown. The unit has a valve housing 17 with a lower inlet for lubricating oil, an intermediate section for accommodating a piston 18 projecting into the housing 15, and an upper outlet 31 for the reciprocating pump thus formed. The outlet 31 is connected to an upper connecting stub 20 via a flow indicator 19 and a channel 30 in a plate 32. From the whole row of these stubs connecting pipes emanate to the lubrication points on the associated engine cylinder, e.g. in a number of 6 - 24.

The pistons 18 are actuated for pressing in by means of actuation tappets 21 on a through-going control shaft 22 which is rotated synchronously with the crankshaft of the engine, and which is seated in bearing cases in the apparatus housing 15. The pistons are not actuated directly, but via thrust pads 23 on respective rocker arms 24 which are pivoting about a fixed journal 25 with eccentric end journals 26 and have upward extensions 27 that interact at the top with respective set screws 28 projecting inwards from the front wall 16. The pistons 18 are spring-loaded in direction inwards against the thrust pads 23 which they will thus keep pressed inwards until respective upper arm ends abut on the set screws 28. Hereby, for each pump unit the initial position will be determined from which each of the thrust pads 23 will be pressed outwards at the passage of the associated actuating tappet 21.

In Fig. 1, a leak indicator 10 is shown at a position between the stub 20 and a connecting pipe 12 connecting the pump unit 8 with an injector 13 which is provided in a cylinder wall 14 for supplying cylinder lubricating oil 29 inside the cylinder.

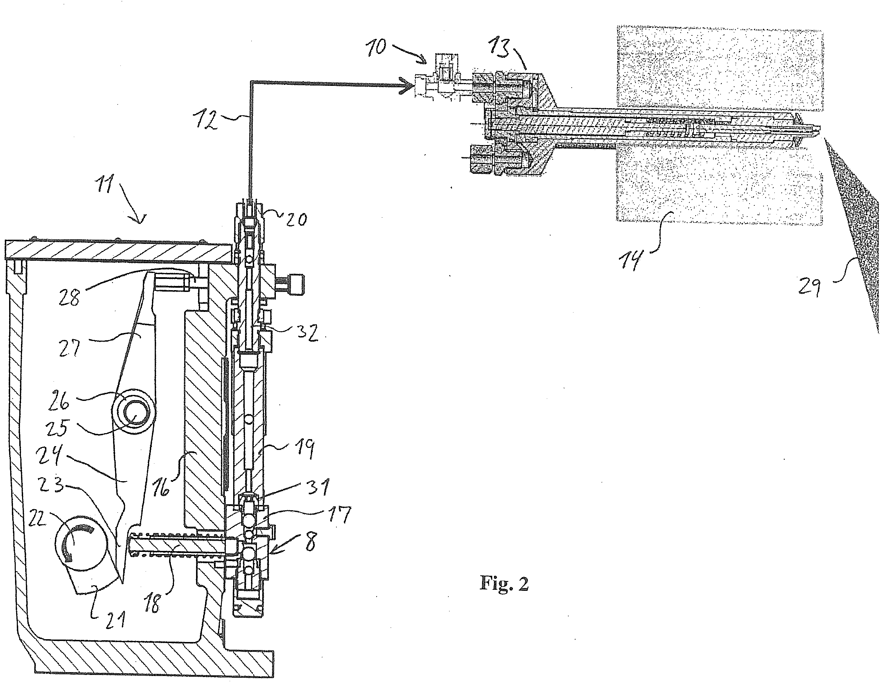

In Fig. 2, a leak indicator 10 is shown as part of the injector 13 as it is placed so that the connecting pipe 12 is connected with the leak indicator.

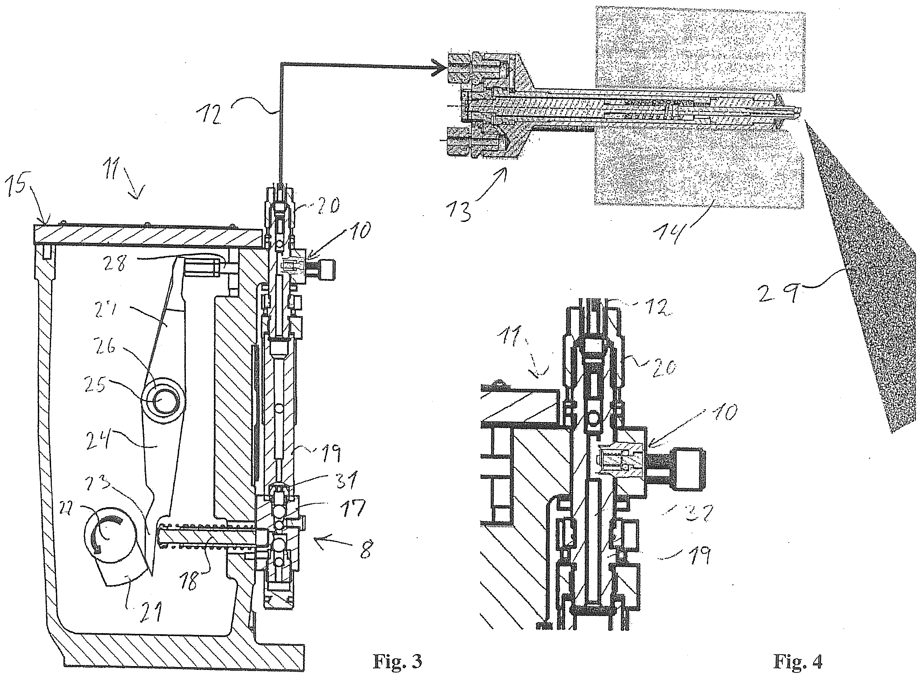

In Fig. 3, a leak indicator 10 is shown as part of the lubricating apparatus and is provided in a plate 32 in front of the front wall 19. This appears more clearly from the small partial view indicated as Fig. 4. It appears that the channel 30 is in contact with the leak indicator 10.

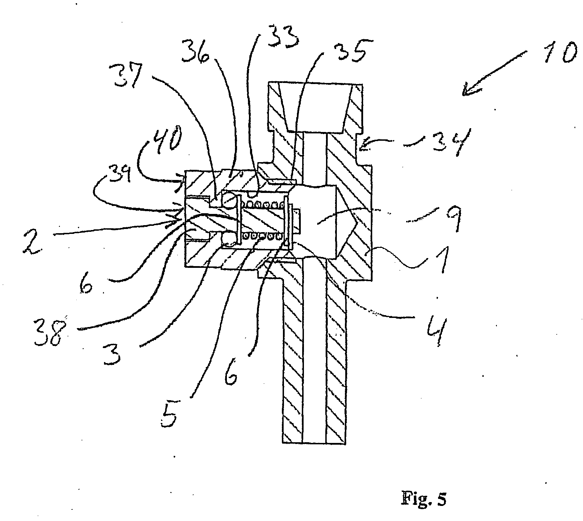

Fig. 5 shows a detailed sectional view of a leak detector 10. This is a simple solution to monitoring possible leaks and includes a housing 1 in which is mounted an indicator pin 2. A spring 5 is provided on the indicator pin 2. When the pressure in a chamber 9 in front of the pin exceeds the prestressed pressure of the spring, the pin is pressed out of the housing from the position shown in Fig. 5.

If the pressure in the chamber 9 in front of the pin 2 drops to a value lower than a preset pressure, the pin returns to its initial position, which is shown in Fig. 5. This may then visually be ascertained by the user. For sealing of the pressurised chamber 9, an O-ring 3 is used between the pin and a boring 33 where pin 2 and spring 5 are provided. The O-ring 3 can be substituted by a piston packing which is better suited for accommodating the longitudinal movement of the pin 2.

The leak indicator 10 is formed by a T-piece 34 with a threaded boring 35. A threaded plug 36 is screwed hereinto. The plug 36 has an inner boring, namely the boring 6 in which the pin is mounted. A collar 37 is provided in the boring 6, at one side forming abutment for a head 38 of the pin 2 at its inner position where the pressure in the chamber 9 goes under the preselected pressure. The outer side 39 of the head will hereby be flush with the outer side 40 of the housing. When the pressure rises above the selected value, the pin is displaced to the left such as seen in Fig. 5, whereby the head is positioned above the outer side 40 of the housing.

In the shown embodiment, the solution is provided with two washers 6 and a lock ring 4. The spring 5 thus bears on the lock ring via one washer 6 and bears on the collar 37 via the other washer 6 and the O-ring 3. If the set pressure is to be set, the lock washer can be substituted by a screw, and the pin 2 is then equipped with a threaded hole for receiving the screw.

As alternative to above, each unit can be fitted with electronic monitoring that either detects directly on the pin 2, e.g. via an inductive sensor, or by a pressure switch emitting a signal when the pressure becomes too low. In that case the latter will substitute pin, spring, O-ring, washers and lock ring.

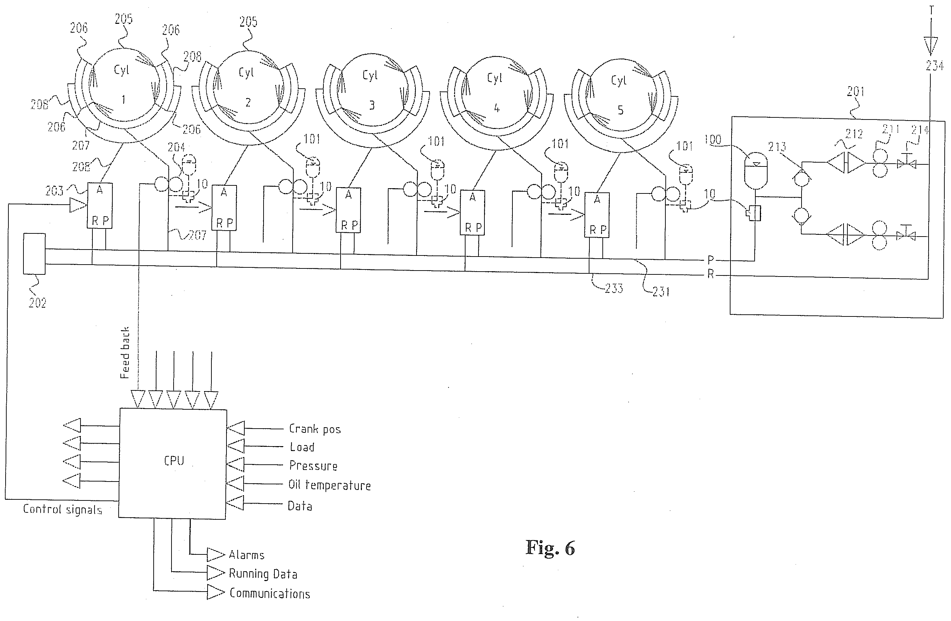

In Fig. 6 is shown an embodiment where lubricating oil is supplied from a pump station via an accumulator to the injectors in the cylinders. It appears that the system includes a pump station 201. Cylinder lubricating oil is conducted under pressure from the pump station 201 through a supply line 231 running along five cylinders 205 in the engine 232 to a pressure valve 202 at the end of the engine 205. Excess lubricating oil is conducted through a parallel return line 233 back to the pump station. The energy of the pump is hereby converted into heating of the lubricating oil in the supply and return lines 231, 233, ensuring reasonably constant temperature of the oil in the supply and return lines and preventing local overheating of the oil. The pump station 201 is supplied with oil through a supply line 234. In the pump unit 201 is used a central accumulator 100 for oil supply instead of delivery directly from the pump unit 201. By using the central accumulator 100 it is possible to equalise possible pressure variations in a particularly safe way. The pressure thus becomes more uniform, and at the same time it becomes easier to control the supplied amount of lubricating oil. A leak detector 10 is provided in the system in connection with the accumulator 100.

In an operating system, accumulators 100 and/or 101 ensure that surges are minimised in the pressure supply line 231 such that execution of the lubricating oil dosing is effected under relatively uniform conditions. In cases where the accumulator, e.g. due to forgotten service or defects, loses it feeding pressure with time, the hydraulic system reacts with marked pressure fluctuations in the pressure supply line 231 to the individual open/close valve units 203. The leak indicator 10 will subsequently react when the pressure fluctuations go below the set value, e.g. by setting the leak indicator at a pressure in the magnitude between 15 and 20% of the system pressure. By system pressure is meant the constant pressure in the supply line without activation.

The pump station 1 includes two pumps 211, two filters 212 and two check valves 213 preventing the lubricating oil from running back through a still-standing pump 211. The pump station also includes two shut-off valves 214 that are inserted in the supply line 234 so that the filters 212 can be cleaned during operation. The two pumps 211 are stand-by for each other and start up automatically in case of a drop in oil pressure.

To the supply and return lines 231, 233 and for each engine cylinder 205 there is connected an opening/closing valve unit 203 having a port P which is connected with the supply line 231, and a port R connected with the return lines 233 via branch lines 215, 216. Each opening/closing valve unit 203 has a port A which through a common tube 208 is connected with a number of lubricating oil injectors 206 mounted in the engine cylinder 205. The common tube 208 is connected with the return line of the injectors. The injectors 206 are supplied with lubricating oil for injecting into the engine cylinder 205 from the supply line 231 through a branch line 207 in which is mounted a volume meter 204.

In Fig. 6 is furthermore indicated a further embodiment of a system according to the invention by broken lines, and here local accumulators 101 are shown. In this embodiment, the central accumulator 100 will thus normally not be present, but there will still be a central lubricating oil supply 201. Local accumulators 101 are disposed in the branch line 207 between the supply line 231 and the injector 206. The local accumulator 101 is shown right in front of the volume meter 204 but it may alternatively be disposed right behind the volume meter. One local accumulator 101 is shown per cylinder.

In Fig. 6 is shown examples of feedback signals received by a control unit and examples of signals and data transmitted from the control unit.

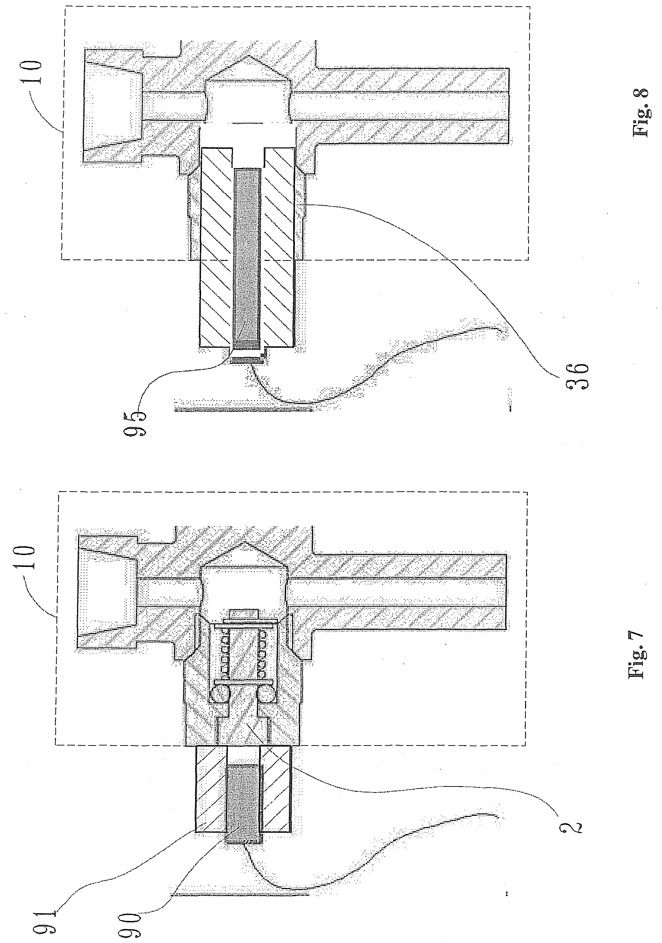

In Fig. 7 is shown a leak indicator 10 where an inductive sensor 90 is mounted, provided in a housing 91 above the pin 2. The inductive sensor 90 is adapted to detect the position of the pin 2 and to emit a signal when the pin leaves its outer position as a consequence of the pressure becoming too low. Monitoring can hereby be effected electronically based on the signal from the sensor 90.

Fig. 8 shows a leak indicator 10 where a pressure switch 95 is mounted in the plug 36. Hereby is achieved an electronic system where the pressure switch 95 is used instead of the mechanically movable parts. The pressure switch is adapted to provide a signal when the pressure becomes too low. Monitoring can hereby be effected electronically based on the signal from the pressure switch 95.

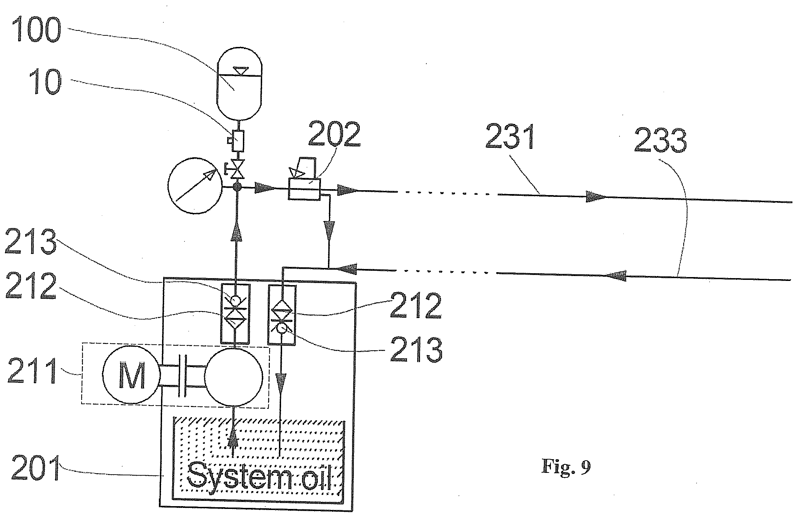

In Fig. 9 is shown an embodiment for a central lubrication system using an accumulator 100. It appears that the system includes a pump station 201. Cylinder lubricating oil is conducted under pressure from the pump station 201 through a supply line 231 and out to a given consumer. Excess lubricating oil is conducted through a parallel return line 233 back to the pump station 201. In the pump unit 201 is used a central accumulator 100 for oil supply instead of delivery directly to the injector (not shown here). By using this accumulator 100 it is possible to equalise possible pressure variations in a particularly safe way. The pressure thus becomes more uniform. A leak detector 10 is provided in the system in connection with the accumulator 100. The leak indicator 10 is provided in a connecting line to the point of consumption, namely the supply line 231.

The pump station 201 includes two pumps 211, two filters 212 and two check valves 213 preventing the oil from running back through a still-standing pump 211. In addition, the system contains a pressure regulating valve 202 that enables adjusting of the pressure in the supply line 231.

In connection with accumulator, the leak detector 10 is mounted, and this can be set such that when the pressure fluctuations in the supply line 231 become greater than desired, e.g. when the pressure drops below 60-80% of the line pressure (without consumption), the leak detector 10 will emit a signal showing this condition.

## Claims

1. A central cylinder lubrication system for cylinder lubrication of engine cylinders (205) in large diesel engines, in particular marine engines, said central cylinder lubrication system effects the cylinder lubrication by oil injection by feeding portions of oil (29) under pressure through respective connecting pipes (12,207) to various points to be lubricated at relevant time intervals, and said central cylinder lubrication system is designed with injectors (13,206) and a lubricating apparatus (11), the system including at least one pump unit (8,201) which via the connecting pipes (12,207) is connected with an associated system unit (13,206;100,101) selected among an injector (13,206) and an accumulator (100,101), wherein injectors (13,206) are provided in the form of oil injection nozzles which is provided in a cylinder wall (14) for supplying cylinder lubricating oil (29) inside the cylinder (205), **characterised in that** a leak detector (10) is provided in the central cylinder lubrication system, in the connecting pipe (12,207) between the pump unit (8,201) and the associated system unit (13,206;100,101), and that the leak detector (10) is adapted for emitting a signal when the oil pressure in the connecting pipe go under a predetermined level, and that the leak detector (10) includes a housing (1) with a chamber (9) connected with the connecting pipe, that a spring-loaded pin (2) is mounted in a boring (6) passing through the wall of the housing (1), that a sealing element (3) is disposed between the pin and the boring, that the pin is pressed outwards by the oil pressure in the chamber to an outer position when the oil pressure overcomes the force from the spring (5).

2. A central cylinder lubrication system according to claim 1, **characterised in that** the pin (2) at its end inside the chamber is provided with a lock ring (4) serving as support for one end of the spring (5), and that the other end of the spring is bearing against a collar (37) in the boring (6).

3. A central cylinder lubrication system according to claim 2, **characterised in that** between the spring (5) and the lock ring (4) a plate (6) is provided, and that between the spring (5) and the collar (37) a plate (6) and the sealing element (3) are provided.

4. A central cylinder lubrication system according to claim 1, 2 or 3, **characterised in that** the pin has a head (38) which in the outer position has an outer side (39) projecting from an outer side (40) of the housing (1), and that the head has an underside bearing against a collar (37) in the boring at an inner position, where the pressure in the oil goes under the predetermined level such that the outer side (39) of the head (38) is flush with the outer side (40) of the housing (1).

5. A central cylinder lubrication system according to any of claims 1 to 4, **characterised in that** the pin (2) is connected with an electronic sensor, e.g. an inductive sensor (90), which is adapted to emit a signal when the pin leaves its outer position.

6. A central cylinder lubrication system according to claim 1, **characterised in that** the leak detector (10) includes a pressure switch (95) provided in the connecting pipe and which is adapted to emit a signal when the pressure goes under the predetermined level.

7. A central cylinder lubrication system according to any preceding claim, **characterised in that** the leak detector is built integrally with the lubricating apparatus (11).

8. A central cylinder lubrication system according to any of claims 1 to 6, **characterised in that** the leak detector is built integrally with the system unit (13,206;100,101).

9. A central cylinder lubrication system according to any of claims 1 to 8, **characterised in that** the housing of the leak detector is formed by a T-piece (34) with a transverse part having a through-going duct and with a stem containing the chamber (9) which is formed by a threaded boring (35) in the stem, and that the boring is closed by a threaded plug (36) with an inner boring (6) in which spring-loaded pin (2) is mounted.

10. A central cylinder lubrication system according to any preceding claim, **characterised in that** the system includes a central pump station (201) connected with system units in the form of injectors (206) in order to supply the injectors with lubricating oil, and system units in the form of a central accumulator (100) or decentralised accumulators (101) through which the oil is supplied to the injectors (206).

11. A central cylinder lubrication system according to any preceding claim, **characterised in that** the system includes a pump station (201) connected with a system unit in the form of an accumulator (100), and that the accumulator is connected with a pressure supply line (231), where execution of the oil dosing is effected under relatively uniform pressure conditions.

## Patentansprüche

1. Zentrales Zylinderschmierungssystem zur Zylinderschmierung von Motorzylindern (205) in großen Dieselmotoren, insbesondere Schiffsmotoren, wobei das zentrale Zylinderschmierungssystem die Zylinderschmierung durch Öleinspritzung bewirkt, indem Teile von Öl (29) unter Druck durch jeweilige Verbindungsrohre (12, 207) zu verschiedenen zu schmierenden Punkten in passenden Zeitintervallen zugeführt werden, und das zentrale Zylinderschmierungssystem mit Einspritzeinrichtungen (13, 206) und einer Schmiervorrichtung (11) konzipiert ist, wobei das System mindestens eine Pumpeneinheit (8, 201) beinhaltet, die über die Verbindungsrohre (12, 207) mit einer zugeordneten Systemeinheit (13, 206; 100, 101) verbunden ist, die unter einer Einspritzeinrichtung (13, 206) und einem Akkumulator (100, 101) ausgewählt wird, wobei die Einspritzeinrichtungen (13, 206) in der Form von Öleinspritzungsdüsen bereitgestellt sind, die in einer Zylinderwand (14) zum Zuführen von Zylinderschmieröl (29) innerhalb des Zylinders (205) bereitgestellt sind, **dadurch gekennzeichnet, dass** ein Leckdetektor (10) in dem zentralen Zylinderschmierungssystem in dem Verbindungsrohr (12, 207) zwischen der Pumpeneinheit (8, 201) und der zugeordneten Systemeinheit (13, 206; 100, 101) bereitgestellt ist, und dass der Leckdetektor (10) zum Emittieren eines Signals ausgelegt ist, wenn der Öldruck in dem Verbindungsrohr unter ein vorbestimmtes Niveau abfällt, und dass der Leckdetektor (10) ein Gehäuse (1) mit einer Kammer (9), die mit dem Verbindungsrohr verbunden ist, beinhaltet, dass ein federbelasteter Stift (2) in einer Bohrung (6) angebracht ist, die durch die Wand des Gehäuses (1) verläuft, dass ein Dichtungselement (3) zwischen dem Stift und der Bohrung angeordnet ist, dass der Stift durch den Öldruck in der Kammer nach außen zu einer äußeren Position gedrückt wird, wenn der Öldruck die Kraft von der Feder (5) überwindet.

2. Zentrales Zylinderschmierungssystem nach Anspruch 1, **dadurch gekennzeichnet, dass** der Stift (2) an seinem Ende innerhalb der Kammer mit einem Arretierungsring (4) versehen ist, der als eine Abstützung für ein Ende der Feder (5) dient, und dass das andere Ende der Feder gegen einen Bund (37) in der Bohrung (6) gelagert ist.

3. Zentrales Zylinderschmierungssystem nach Anspruch 2, **dadurch gekennzeichnet, dass** eine Platte (6) zwischen der Feder (5) und dem Arretierungsring (4) bereitgestellt ist und dass eine Platte (6) und das Dichtungselement (3) zwischen der Feder (5) und dem Bund (37) bereitgestellt sind.

4. Zentrales Zylinderschmierungssystem nach Anspruch 1, 2 oder 3, **dadurch gekennzeichnet, dass** der Stift einen Kopf (38) aufweist, der in der äußeren Position eine Außenseite (39) aufweist, die von einer Außenseite (40) des Gehäuses (1) vorspringt, und dass der Kopf eine Unterseite aufweist, die gegen einen Bund (37) in der Bohrung an einer inneren Position gelagert ist, an der der Druck in dem Öl unter das vorbestimmte Niveau abfällt, sodass die Außenseite (39) des Kopfs (38) mit der Außenseite (40) des Gehäuses (1) bündig ist.

5. Zentrales Zylinderschmierungssystem nach einem der Ansprüche 1 bis 4, **dadurch gekennzeichnet, dass** der Stift (2) mit einem elektronischen Sensor verbunden ist, z. B. ein induktiver Sensor (90), der ausgelegt ist, um ein Signal zu emittieren, wenn der Stift seine äußere Position verlässt.

6. Zentrales Zylinderschmierungssystem nach Anspruch 1, **dadurch gekennzeichnet, dass** der Leckdetektor (10) einen Druckschalter (95) beinhaltet, der in dem Verbindungsrohr bereitgestellt ist und der ausgelegt ist, um ein Signal zu emittieren, wenn der Druck unter das vorbestimmte Niveau abfällt.

7. Zentrales Zylinderschmierungssystem nach einem der vorstehenden Ansprüche, **dadurch gekennzeichnet, dass** der Leckdetektor einstückig mit der Schmiervorrichtung (11) aufgebaut ist.

8. Zentrales Zylinderschmierungssystem nach einem der Ansprüche 1 bis 6, **dadurch gekennzeichnet, dass** der Leckdetektor einstückig mit der Systemeinheit (13, 206; 100, 101) aufgebaut ist.

9. Zentrales Zylinderschmierungssystem nach einem der Ansprüche 1 bis 8, **dadurch gekennzeichnet, dass** das Gehäuse des Leckdetektors durch ein T-Stück (34) mit einem Querteil, das eine durchgehende Rohrleitung aufweist, und mit einem Schaft ausgebildet ist, der die Kammer (9) enthält, die durch eine Gewindebohrung (35) in dem Schaft ausgebildet ist, und dass die Bohrung durch einen Gewindestopfen (36) mit einer Innenbohrung (6), in der der federbelastete Stift (2) angebracht ist, geschlossen ist.

10. Zentrales Zylinderschmierungssystem nach einem der vorstehenden Ansprüche, **dadurch gekennzeichnet, dass** das System eine zentrale Pumpenstation (201) beinhaltet, die mit Systemeinheiten in der Form von Einspritzeinrichtungen (206), um die Einspritzeinrichtungen mit Schmieröl zu versorgen, und Systemeinheiten in der Form eines zentralen Akkumulators (100) oder dezentraler Akkumulatoren (101), durch die das Öl zu den Einspritzeinrichtungen (206) zugeführt wird, verbunden ist.

11. Zentrales Zylinderschmierungssystem nach einem der vorstehenden Ansprüche, **dadurch gekennzeichnet, dass** das System eine Pumpenstation (201) beinhaltet, die mit einer Systemeinheit in der Form eines Akkumulators (100) verbunden ist, und dass der Akkumulator mit einer Druckzufuhrleitung (231) verbunden ist, in der die Ausführung der Öldosierung unter relativ einheitlichen Druckbedingungen bewirkt wird.

## Revendications

1. Système central de graissage de cylindres pour le graissage des cylindres de moteur (205) des gros moteurs diesel, en particulier des moteurs de navires, ledit système central de graissage de cylindres effectuant le graissage des cylindres par injection d'huile en alimentant des parties d'huile (29) sous pression par des tuyaux de raccordement respectifs (12, 207) en divers points à graisser à des intervalles de temps pertinents, et ledit système central de graissage de cylindres étant conçu avec des injecteurs (13, 206) et un appareil de graissage (11), le système comprenant au moins une unité de pompage (8, 201) qui, par les tuyaux de raccordement (12, 207), est raccordée à une unité de système associée (13, 206 ; 100,101) sélectionnée parmi un injecteur (13, 206) et un accumulateur (100, 101), dans lequel les injecteurs (13, 206) sont prévus sous forme de buses d'injection d'huile prévues dans une paroi de cylindre (14) pour alimenter l'huile de graissage de cylindre (29) à l'intérieur du cylindre (205), **caractérisé en ce qu'**un détecteur de fuite (10) est prévu dans le système central de graissage de cylindres, dans le tuyau de raccordement (12, 207), entre l'unité de pompage (8, 201) et l'unité de système associée (13, 206 ; 100, 101), **en ce que** le détecteur de fuite (10) est adapté pour émettre un signal lorsque la pression d'huile dans le tuyau de raccordement passe sous un niveau prédéterminé, **en ce que** le détecteur de fuite (10) comprend un boîtier (1) avec une chambre (9) raccordée au tuyau de raccordement, **en ce qu'**une goupille à ressort (2) est montée dans un alésage (6) traversant la paroi du boîtier (1), **en ce qu'**un élément d'étanchéité (3) est disposé entre la goupille et l'alésage, et **en ce que** la goupille est pressée vers l'extérieur par la pression d'huile dans la chambre vers une position extérieure lorsque la pression d'huile excède la force exercée par le ressort (5).

2. Système central de graissage de cylindres selon la revendication 1, **caractérisé en ce que** la goupille (2), à son extrémité à l'intérieur de la chambre, est munie d'un anneau de verrouillage (4) servant d'appui à une extrémité du ressort (5), et **en ce que** l'autre extrémité du ressort est en appui contre une collerette (37) dans l'alésage (6).

3. Système central de graissage de cylindres selon la revendication 2, **caractérisé en ce qu'**une plaque (6) est prévue entre le ressort (5) et l'anneau de verrouillage (4), et **en ce qu'**une plaque (6) et l'élément d'étanchéité (3) sont prévus entre le ressort (5) et la collerette (37).

4. Système central de graissage de cylindres selon la revendication 1, 2 ou 3, **caractérisé en ce que** la goupille a une tête (38) qui, dans sa position extérieure, a un côté extérieur (39) faisant saillie depuis un côté extérieur (40) du boîtier (1), et **en ce que** la tête a une face inférieure prenant appui contre une collerette (37) dans l'alésage à une position intérieure, où la pression dans l'huile passe sous le niveau prédéterminé, de sorte que le côté extérieur (39) de la tête (38) affleure au niveau du côté extérieur (40) du boîtier (1).

5. Système central de graissage de cylindres selon l'une quelconque des revendications 1 à 4, **caractérisé en ce que** la goupille (2) est reliée à un capteur électronique, par exemple à un capteur inductif (90), qui est adapté pour émettre un signal lorsque la goupille quitte sa position extérieure.

6. Système central de graissage de cylindres selon la revendication 1, **caractérisé en ce que** le détecteur de fuite (10) comprend un commutateur de pression (95) prévu dans le tuyau de raccordement et qui est adapté pour émettre un signal lorsque la pression passe sous le niveau prédéterminé.

7. Système central de graissage de cylindres selon une quelconque revendication précédente, **caractérisé en ce que** le détecteur de fuite est construit d'un seul tenant avec l'appareil de graissage (11).

8. Système central de graissage de cylindres selon l'une quelconque des revendications 1 à 6, **caractérisé en ce que** le détecteur de fuite est construit d'un seul tenant avec l'unité de système (13, 206 ; 100, 101).

9. Système central de graissage de cylindres selon l'une quelconque des revendications 1 à 8, **caractérisé en ce que** le boîtier du détecteur de fuite est formé par une pièce en T (34) avec une partie transversale ayant un conduit traversant et avec une tige contenant la chambre (9) qui est formée par un alésage fileté (35) dans la tige, et **en ce que** l'alésage est fermé par un bouchon fileté (36) avec un alésage intérieur (6) dans lequel est montée la goupille à ressort (2).

10. Système central de graissage de cylindres selon une quelconque revendication précédente, **caractérisé en ce que** le système comprend une station de pompage centrale (201) raccordée à des unités de système sous forme d'injecteurs (206) afin d'alimenter les injecteurs en huile de graissage, et des unités de système sous la forme d'un accumulateur central (100) ou d'accumulateurs décentralisés (101) par lesquels l'huile est fournie aux injecteurs (206).

11. Système central de graissage de cylindres selon une quelconque revendication précédente, **caractérisé en ce que** le système comprend une station de pompage (201) raccordée à une unité de système sous forme d'accumulateur (100), et **en ce que** l'accumulateur est relié à une ligne d'alimentation en pression (231), où le dosage de l'huile est effectué dans des conditions de pression relativement uniformes.
